# EUROPÄISCHE PATENTSCHRIFT

(11) **EP 2 094 535 B1**
(45) Veröffentlichungstag und Bekanntmachung des Hinweises auf die Patenterteilung: **21.09.2016**
(21) Anmeldenummer: 07847571.2
(22) Anmeldetag: 30.11.2007
(51) Int. Cl.: B60R 16/027

(54) **WICKELFEDERKASSETTE**
VOLUTE SPRING CASSETTE
CASSETTE À RESSORT SPIRAL

(30) Priorität: 30.11.2006 DE 102006056503
(43) Veröffentlichungstag der Anmeldung: 02.09.2009
(73) Patentinhaber: Leopold Kostal GmbH & Co. KG, 58513 Lüdenscheid (DE)
(72) Erfinder: LACROIX, Jeremy, 59846 Sundern (DE); RENISCH, Udo, 51688 Wipperfürth (DE); PRIEBE, Rene, 58509 Lüdenscheid (DE)
(86) Internationale Anmeldenummer: PCT/EP2007/063055
(87) Internationale Veröffentlichungsnummer: WO 2008/065183

(56) Entgegenhaltungen:
- EP-A- 1 063 132
- EP-A- 1 468 876
- FR-A- 2 667 456
- US-A- 5 314 344

## Beschreibung

Die Erfindung betrifft eine Wickelfederkassette gemäß des Oberbegriffs des Anspruchs 1 und des Anspruchs 12.

Wickelfederkassetten kommen bevorzugt in Kraftfahrzeugen zur Anwendung, wobei das Flachkabel zur Energie- und/oder Signalübertragung zwischen feststehenden und drehbeweglichen Teilen, beispielsweise an einer Lenksäule, verwendet wird.

Die Patentanmeldung US 5 313 344 A zeigt eine gattungsgemäße Wickelfederkassette, die neben einem Statorgehäuseteil und einem Rotorgehäuseteil noch wenigstens ein weiteres bewegliches Teil ("moving member") aufweist, welches zwischen dem Statorgehäuseteil und dem Rotorgehäuseteil angeordnet ist und ein Teil einer Rollenmechanik ausbildet. Auf dem beweglichen Teil, wie auch auf dem Statorgehäuseteil und dem Rotorgehäuseteil sind Markierungen aufgebracht. Ein flexibles Kabel bildet eine Leiterschleife aus. Wenn sich die Leiterschleife in einer bestimmten Lage befindet, ist die Markierung auf dem beweglichen Teil durch eine mit einem transparenten Material versehene Öffnung des Statorgehäuseteils erkennbar.

Aus der DE 198 05 106 C1 ist eine weitere gattungsgemäße Wickelfederkassette bekannt, bei der die Stellung der gegeneinander drehbeweglichen Gehäuseteile der Wickelfederkassette erfasst werden kann. Hierzu bildet sowohl ein Flächenabschnitt einer der Mantelflächen, als auch ein Abschnitt des Flachkabels jeweils eine Elektrode aus. Nähern sich diese beiden Abschnitte einander an, so bilden die beiden Elektroden die Flächen eines Kondensators aus, dessen Kapazität von einer geeigneten Elektronik ausgewertet wird, wodurch bestimmte Relativlagen der beiden Gehäuseteile zueinander erkennbar sind. Mit dieser Lageerkennung kann beispielsweise die Geradeausstellung der Fahrzeugräder erkannt werden.

Damit eine solche Lageerkennung funktioniert, muss die Wickelfederkassette mit einer Elektronik und, soweit diese Elektronik Bestandteil der Wickelfederkassette ist, mit einer Spannungsversorgung und einer Anzeigevorrichtung verbunden sein. Will man die Stellung der Wickelfederkassette vor dem Einbau in das Kraftfahrzeug auf die oben beschriebene Weise überprüfen, so erfordert dies daher eine relativ aufwändige Vorbereitung durch Verbindung der Wickelfederkassette mit einer Spannungsversorgung oder einer elektronischen Prüfeinrichtung.

Um eine besonders einfache Lageüberprüfung einer Wickelfederkassette zu ermöglichen, ist bei einer von der Anmelderin gefertigten Wickelfederkassette eines der Gehäuseteile zumindest teilweise transparent ausgebildet. Sobald die Schleife durch einen fensterförmigen Abschnitt des Gehäuseteils erkennbar ist, befindet sich die Wickelfederkassette zumindest annähernd in ihrer Nullstellung. Von hier aus kann die exakte Nullstellung eingestellt werden, beispielsweise indem zwei Markierungen auf den Gehäuseteilen in Übereinstimmung gebracht werden. Die Nullstellungsüberprüfung bzw. -justierung kann somit ohne elektrische oder elektronische Hilfsmittel erfolgen.

Die Überprüfung bei der zuletzt beschriebenen Wickelfederkassette erfolgt üblicherweise unmittelbar vor dem Anbau der Wickelfederkassette an die Lenksäule eines Kraftfahrzeugs. Hierbei ergibt sich aber ein Problem, wenn die Wickelfederkassette über mehrere Umdrehungen verstellbar ist und vor der Überprüfung nicht in der Nähe der Nullstellung positioniert ist. Es ist dann nämlich nicht unmittelbar ersichtlich, in welcher Drehrichtung die Wickelfederkassette in ihre Nullstellung gebracht werden kann und wie viele vollständige Umdrehungen hierzu eventuell erforderlich sind. Dies durch Ausprobieren herauszufinden, ist relativ zeitaufwendig und verteuert damit den Fertigungsprozess des Kraftfahrzeugs. Erfolgt darüber hinaus bei einem solchen Versuch ein schnelles und damit eventuell zu kraftvolles Verdrehen in die falsche Drehrichtung, so kann die Wickelfederkassette sogar beschädigt oder zerstört werden.

Es war daher die Aufgabe der Erfindung, eine Wickelfederkassette zu schaffen, bei der Betrag und Richtung einer Verdrehung aus der Nullstellung, auch über mehrere Umdrehungen, auf besonders einfache Weise erkennbar ist.

Diese Aufgabe wird erfindungsgemäß einerseits durch die kennzeichnenden Merkmale des unabhängigen Anspruchs 1 und andererseits durch die kennzeichnenden Merkmale des unabhängigen Anspruchs 12 gelöst. Die beiden unabhängig voneinander anwendbaren Lösungen können darüber hinaus sogar vorteilhaft in Kombination miteinander verwendet werden.

So besteht eine erste Lösung der erfinderischen Aufgabenstellung darin, dass zumindest eines der Gehäuseteile Markierungen aufweist, die in einer vorgegeben Relativstellung der Gehäuseteile mit der Lage der von außen unmittelbar sichtbaren Schleife korrespondieren und an denen Betrag und Richtung der absoluten Verdrehung beider Gehäuseteile gegeneinander ablesbar ist.

Eine zweite Lösung besteht darin, dass auf dem Flachkabel Markierungen aufgebracht sind, die im Bereich der Schleife von außerhalb der Wickelfederkassette ablesbar sind, und die die Verdrehungsweite und Verdrehungsrichtung gegenüber der Nullstellung der Wickelfederkassette unmittelbar anzeigen.

In einer vorteilhaften Kombination beider Lösungen kann vorgesehen sein, dass durch die Markierungen auf einem Gehäuseteil vollständige Verdrehungen gegenüber der Nullstellung ablesbar sind, während durch die Markierungen auf dem Flachkabel auch Zwischenpositionen unmittelbar ablesbar sind. Je nach Verdrehungszustand der Wickelfederkassette kann entweder durch die erste oder die zweite Ablesemöglichkeit der Verdrehungszustand schneller erkannt werden, so dass eine diesbezügliche Wahlmöglichkeit die Erkennbarkeit einer Verdrehstellung weiter verbessert.

Somit kann stets auf einfache und kostengünstige Weise und ohne eine Verwendung elektronischer oder komplexer mechanischer Hilfsmittel festgestellt werden, um wie viele Umdrehungen das Rotorgehäuseteil gegenüber dem Statorgehäuseteil verdreht ist. Dementsprechend kann bei einer Positionierung des Rotorgehäuseteils außerhalb der Nullstellung, dieses ohne besonderen Aufwand wieder schnell in die Nullstellung zurückgedreht werden.

Vorteilhafte Ausgestaltungen und Weiterbildungen einer erfindungsgemäßen Wickelfederkassette sind in den abhängigen Ansprüchen angeführt. Ein Ausführungsbeispiel der Erfindung ist in der Zeichnung dargestellt und wird im folgenden anhand der Zeichnung näher erläutert. Es zeigen
- Figur 1: eine Wickelfederkassette in ihrer Nullstellung,
- Figur 2 bis 5: eine Wickelfederkassette in jeweils einer Position außerhalb ihrer Nullstellung,
- Figur 6: den schematische Aufbau einer Wickelfederkassette.

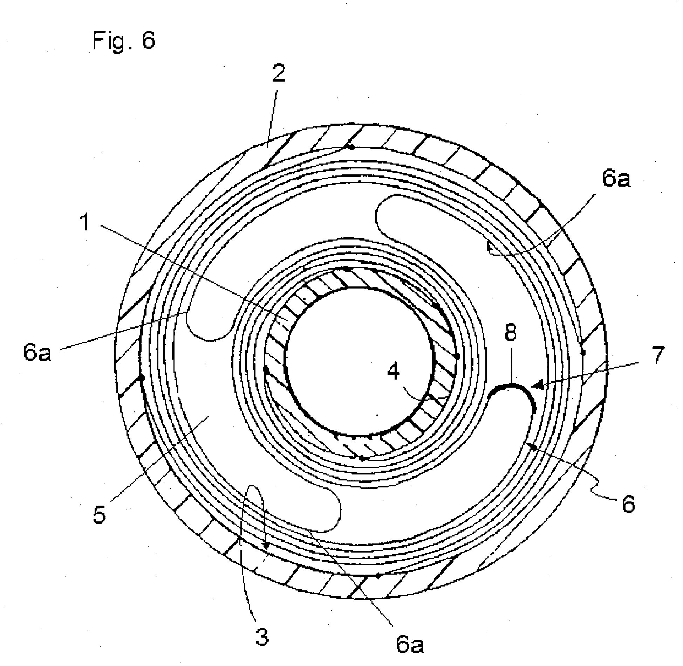

Anhand der schematischen Darstellung der Figur 6 sei zunächst der prinzipielle Aufbau einer Wickelfederkassette, auf die sich die Erfindung bezieht, kurz erläutert. Die Figur 6 zeigt ein zylindrisch ausgebildetes Rotorgehäuseteil (1), das etwa mit der Lenksäule eines Kraftfahrzeugs verbindbar ist, und ein konzentrisch bezüglich des Rotorgehäuseteils (1) angeordnetes Statorgehäuseteil (2). Das Statorgehäuseteil (2) ist ein zylindrischer Körper, dessen innere Mantelfläche (3) von der äußeren Mantelfläche (4) des Rotorgehäuseteils (1) beabstandet ist. Durch die äußere Mantelfläche (4) des Rotorgehäuseteils (1) und die innere Mantelfläche (3) des Statorgehäuseteils (2) wird in radialer Richtung ein Wickelspalt (5) begrenzt, in dem ein flexibles Flachkabel (6) angeordnet ist, welches elektrische Verbindungen zwischen nicht dargestellten elektrischen Elementen an dem feststehenden Statorgehäuseteil (2) und dem drehbeweglichen Rotorgehäuseteil (1) herstellt.

Das eine Ende des Flachkabels (6) ist um die äußere Mantelfläche (4) des Rotorgehäuseteils (1) gewickelt und an dieser befestigt, während das andere Ende des Flachkabels (6) in entgegengesetzter Wickelrichtung an der inneren Mantelfläche (3) des Statorgehäuseteils (2) anliegend gewickelt und an dieser befestigt ist. Die beiden Flachkabelabschnitte sind durch eine die Wickelrichtung umkehrende Schleife (7) voneinander getrennt. Die Anzahl der Wicklungen des Flachkabels (6) um das Rotorgehäuseteil (1) bzw. das Statorgehäuseteil (2) ist abhängig von der gewünschten Umdrehungszahl, die mit dem Rotorgehäuseteil (1) in die eine bzw. in die andere Richtung getätigt werden sollen. Die Figur 6 zeigt das Flachkabel in einer mittleren Position, so dass das Rotorgehäuseteil (1) gegen das Statorgehäuseteil(2) aus dieser Position in beide Drehrichtungen etwa gleichweit verstellbar ist.

Der in diesem Dokument verwendete Begriff "Nullstellung" bezeichnet eine speziell ausgewählte mittlere Position, die als Bezugsposition für Drehbewegungen des Rotorgehäuseteils (1) gegenüber dem Statorgehäuseteil (2) dient, und die insbesondere die Einbaustellung der Gehäuseteile (1, 2) beim Einbau in ein Kraftfahrzeug definiert. Im Bereich der jeweils endseitigen Befestigung des Flachkabels (6) erfolgt eine nicht näher dargestellte Kontaktierung der einzelnen Litzen.

Wie in der Figur 6 erkennbar ist, kann die Wickelfederkassette auch mehrere Flachkabel (6, 6a) aufweisen. Eine symmetrische Anordnung mehrerer Flachkabel (6, 6a) ist vorteilhaft, da hierdurch ein besonders gleichmäßiges und störungsfreies Auf- und Abwickeln der Flachkabel (6, 6a) erzielbar ist. Die bezüglich des ersten Flachkabels (6) zusätzlichen Flachkabel (6a) können dabei entweder elektrisch funktionslos sein oder aber bedarfsweise auch zusätzliche elektrische Verbindungen bereitstellen.

Eines der Flachkabel - hier beispielhaft das mit dem Bezugszeichen 6 gekennzeichnete Flachkabel - ist mit einer Markierung (8) versehen, durch die es von den weiteren Flachkabeln (6a) unterscheidbar ist. Diese Markierung (8) kann insbesondere eine Farbmarkierung oder eine auf den Flächen des Flachkabels (6) aufgebrachte Bedruckung sein.

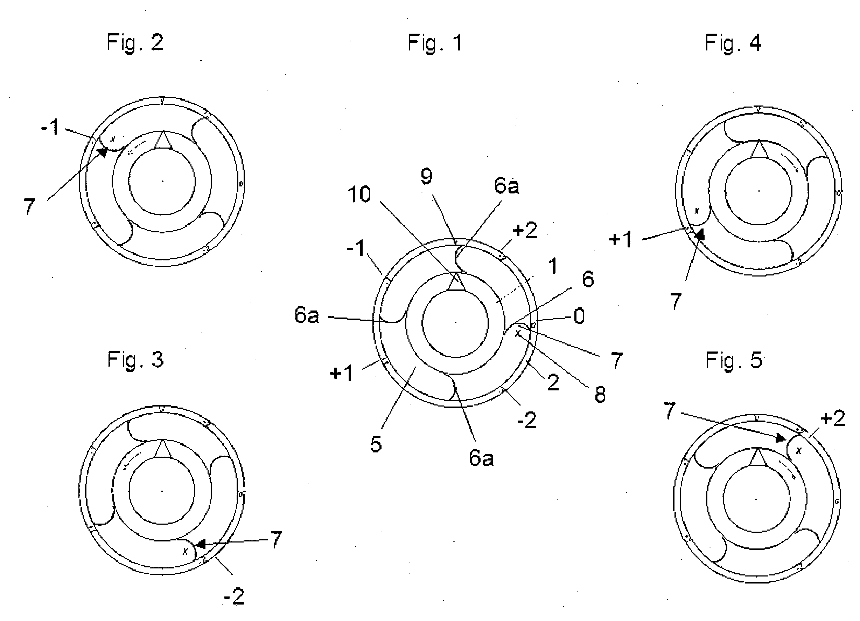

Die Figuren 1 bis 5 zeigen in einer noch weiter vereinfachten Darstellung die Lage des Flachkabels (6) und der weiteren Flachkabel (6a) relativ zum Stator- bzw. Rotorgehäuseteil (2, 1) bei unterschiedlichen Verdrehungen der Wickelfederkassette. Da die weiteren Flachkabel (6a) als elektrisch funktionslos angenommen werden, werden sie im folgenden auch kurz als Blindkabel bezeichnet.

In den Figuren 1 bis 5 sind zwischen dem Statorgehäuseteil (2) und dem Rotorgehäuseteil (1) jeweils die Schleifen (7) von vier Flach- bzw. Blindkabeln (6, 6a) erkennbar. Wie erwähnt, ist das Flachkabel (6) durch eine Bedruckung oder eine farbliche oder sonstige Kennzeichnung, die es von den Blindkabeln (6a) unterscheidet, markiert. Diese Markierung (8), die in den Figuren 1 bis 5 durch ein Kreuz symbolisch dargestellt ist, ist zumindest auf den Abschnitten des Flachkabels (6) aufgebracht, die in bestimmten Relativstellungen des Rotorgehäuseteils (1) bezüglich des Statorgehäuseteils (2) als Schleife (7) zwischen Rotorgehäuseteil (1) und Statorgehäuseteil (2) erkennbar ist, und zwar insbesondere in den Positionen, die bezogen auf die Nullstellung vollständigen Umdrehungen des Rotorgehäuseteils (1) relativ zum Statorgehäuseteil (2) entsprechen.

Zur Vereinfachung kann das Flachkabel (6) natürlich auch entlang seiner gesamten Länge mit einer Markierung (8) versehen sein. Enthält die Wickelfederkassette abweichend von der Zeichnung, nur ein einziges Flachkabel (6), so ist selbstverständlich ein zur Unterscheidung geeignetes Mittel überflüssig und auf die Anbringung einer spezielle Markierung am Flachkabel (6) kann verzichtet werden.

In den Figuren 1 bis 5 befinden sich das Statorgehäuseteil (2) und das Rotorgehäuseteil (1) in jeweils derselben relativen Position zueinander; dieses ist daran erkennbar, dass eine Pfeilmarkierung (9) auf dem Statorgehäuseteil (2) und eine Pfeilmarkierung (10) auf dem Rotorgehäuseteil (1) jeweils aufeinander zeigen. Die Pfeilmarkierungen (9, 10) stellen sicher, dass in allen Fällen entweder die exakte Nullstellung der Gehäuseteile (1, 2) oder aber vollständige Umdrehungen gegenüber der Nullstellung betrachtet werden. Statt der in Übereinstimmung zu bringenden Pfeilmarkierungen (9, 10) sind in realen Ausführungen auch markante Gehäusemerkmale, wie beispielsweise am Statorgehäuseteil (2) und/oder Rotorgehäuse (1) angeformte Steckverbinder, zur relativen Ausrichtung der Gehäuseteile (1, 2) gleichwirkend verwendbar.

Die Figuren 2 bis 5 zeigen unterschiedliche absolute Positionen des Rotorgehäuseteils (1) gegenüber dem Statorgehäuseteil (2), wobei die Figur 2 eine Linksdrehung des Rotorgehäuseteils (1) um eine Umdrehung, die Figur 3 eine Linksdrehung des Rotorgehäuseteils (1) um zwei Umdrehungen und die Figuren 4 und 5 entsprechende Rechtsdrehungen um eine bzw. zwei Umdrehungen darstellen.
Wie die Figuren 2 und 3 zeigen, verschiebt sich die markierte Leiterschleife (7) mit jeder vollständigen Linksdrehung des Rotorgehäuseteils (1) um einen bestimmten Winkelbetrag nach links; aus den Figuren 4 und 5 ist bei einer Rechtsdrehung des Rotorgehäuseteils (1) eine entsprechende Rechtsverdrehung der markierten Leiterschleife (7) ersichtlich.

Der Winkelbetrag, um den sich die Leiterschleife (7) mit der Umdrehung des Rotorgehäuseteils (2) verschiebt, wird durch das Radienverhältnis der inneren Mantelfläche (3, siehe Figur 1) des Statorgehäuses (1) und der äußeren Mantelfläche (4) des Rotorgehäuses (1) bestimmt und liegt für die in den Figuren 1 bis 5 schematisch dargestellte Ausbildung der Gehäuseteile (1, 2) beispielhaft bei knapp 150° pro Rotorumdrehung.

Die Leiterschleife (7) gelangt somit für alle vier dargestellten vollständigen Umdrehungen in eine eindeutig bestimmte Stellung innerhalb des Wickelspalts (5). Eine jeweils in radialer Richtung daneben befindliche Stelle des Statorgehäuseteils (2) ist mit einer Kennzeichnung (-1, -2, +1, +2) versehen, die die Anzahl der Umdrehungen aus der Nullstellung und die Richtung der Verdrehung unmittelbar angibt. Eine entsprechende Kennzeichnung (0) ist auch für die Nullstellung der Wickelfederkassette auf dem Statorgehäuseteil (2) angegeben.

Damit die Lage der Leiterschleife auch bei bereits zusammengefügtem Rotor- und Statorgehäuseteil (1, 2) möglich ist, sind transparente Bereiche, etwa durch angeformte Fenster, am Rotor- und/oder am Statorgehäuseteil (1, 2) vorgesehen. Besonders vorteilhaft ist es, wenigstens eines der beiden Gehäuseteile (1, 2) vollständig aus einem transparenten Kunststoff zu spritzen, da hierdurch auf eine aufwändige Mehrkomponententechnik verzichtet werden kann.

Es ist vorteilhaft, wenn das transparente Gehäuseteil (1 bzw. 2) in axialer Richtung eine Ansicht von oben oder von unten auf den Wickelspalt (5) ermöglicht, so dass die Lage der Leiterschleife (7) mit einem Blick unmittelbar erfassbar ist. Besonders vorteilhaft ist es, speziell das den Wickelspalt (5) von oben abdeckende Rotorgehäuseteil (1) transparent auszuführen. Dabei ergibt sich eine Ansicht auf die Leiterschleife (7), die der in der in den Figuren 1 bis 5 dargestellten Ansicht entspricht. Abweichend zur Darstellung in den Figuren können die Kennzeichnungen (-2, -1, 0, +1, +2) statt auf dem Statorgehäuseteil (2) auch auf dem transparent ausgeführten Rotorgehäuseteil (1) direkt oberhalb des Wickelspalts (5) angeordnet sein.

Alternativ oder zusätzlich zu den Markierungen (-2, -1,0, +1, +2) auf einem Gehäuseteil (1, 2) können auch auf einer Außenseite eines Flachkabels (6, 6a), hier nicht dargestellte, Markierungen aufgebracht sein, die die Verdrehungsanzahl und die Verdrehungsrichtung durch Zahlen und Symbolangaben, etwa durch Angabe eines Vorzeichen für die Drehrichtung, anzeigen.

Wie die Figur 6 nahe legt, können diese Markierungen derart auf dem Flachkabel (6) aufgebracht sein, dass sie nur im Bereich der Schleife (7), also speziell auf der konvexen Ausstülpung der Schleife (7) ablesbar sind und ansonsten durch die Anlage an den Mantelflächen (3, 4) verdeckt sind.

Da mit der Drehung der Rotorgehäuses (1) jeweils unterschiedliche Abschnitte des Flachkabels (6) die Schleife (7) ausbilden, können mit der Drehung die jeweilige Drehweite anzeigende Markierungen erkennbar gemacht werden. Vorteilhaft hierbei ist, dass zur Ablesung dieser Markierungen die Gehäuseteile (1, 2) nicht in eine bestimmte relative Winkelstellung zueinander gebracht werden müssen und dass die Markierungen auch eine deutlich feinere Unterteilung als vollständige Umdrehungen darstellen kann.

Hiermit sind zwei, insbesondere auch vorteilhaft kombinierbare Möglichkeiten gegeben, um bei der Montage, eine gegenüber der Nullstellung verdrehte Wickelfederkassette schnellstmöglich und fehlerfrei in die Nullstellung zurückzuführen.

### Bezugszeichen

- 1: Rotorgehäuseteil
- 2: Statorgehäuseteil
- 3: Mantelfläche (des Statorgehäuseteils)
- 4: Mantelfläche (des Rotorgehäuseteils)
- 5: Wickelspalt
- 6: Flachkabel
- 6a: weitere Flachkabel (Blindkabel)
- 7: Schleife
- 8: Kennzeichnung (am Flachkabel)
- 9: Pfeilmarkierung (am Statorgehäuseteil)
- 10: Pfeilmarkierung (am Rotorgehäuseteil)
- -2, -1, 0, +1, +2: Markierungen

## Patentansprüche

1. Wickelfederkassette mit einem um seine Längsachse in beide Richtungen drehbaren zylindrischen Rotorgehäuseteil (1) und einem feststehenden zylindrischen Statorgehäuseteil (2), wobei beide Gehäuseteile (1, 2) zueinander koaxial angeordnet sind, wobei ein durch die äußere Mantelfläche (4) des innenliegenden Gehäuseteils (1) und die innere Mantelfläche (3) des außenliegenden Gehäuseteils (2) begrenzter Wickelspalt (5) gebildet ist, in dem ein flexibles Flachkabel (6) dergestalt angeordnet ist, dass sein eines Ende am Rotorgehäuseteil (1) und sein anderes Ende am Statorgehäuseteil (2) befestigt ist und in der Nullstellung der beiden Gehäuseteile (1, 2) zueinander mit einem Abschnitt um die äußere Mantelfläche (4) des innen liegenden Gehäuseteils (1) in der einen Richtung und mit einem weiteren Abschnitt an der inneren Mantelfläche (4) des außenliegenden Gehäuseteils (2) anliegend in entgegengesetzter Richtung gewickelt ist, so dass zwischen den beiden Abschnitten eine die Wickelrichtung umkehrende Schleife (7) gebildet ist, wobei wenigstens eines der Gehäuseteile (1, 2) zumindest abschnittsweise transparent ausgebildet ist, so dass die Lage der Schleife (7) zumindest in einer Relativstellung der Gehäuseteile (1, 2) zueinander von außen erkennbar ist,
**dadurch gekennzeichnet,**
**dass** zumindest eines der Gehäuseteile (1, 2) Markierungen (-2, -1, 0, +1, +2) aufweist, die in einer vorgegeben Relativstellung der Gehäuseteile (1, 2) mit der von außen unmittelbar sichtbaren Lage der Schleife (7) korrespondieren und an denen Betrag und Richtung der absoluten Verdrehung beider Gehäuseteile (1, 2) gegeneinander ablesbar ist.

2. Wickelfederkassette nach Anspruch 1, **dadurch gekennzeichnet, dass** ein Gehäuseteil (1, 2) zumindest im Bereich der Markierungen (-2, -1, 0, +1, +2) transparent ausgebildet ist.

3. Wickelfederkassette nach Anspruch 1, **dadurch gekennzeichnet, dass** zumindest ein Gehäuseteil (1, 2) vollständig aus einem transparenten Material besteht.

4. Wickelfederkassette nach Anspruch 3, **dadurch gekennzeichnet, dass** das Rotorgehäuseteil (1) aus einem transparenten Material besteht.

5. Wickelfederkassette nach Anspruch 1, **dadurch gekennzeichnet, dass** die Markierungen (-2, -1, 0, +1, +2) die Anzahl der vollständigen Umdrehungen gegenüber der Nullstellung angeben.

6. Wickelfederkassette nach Anspruch 1, **dadurch gekennzeichnet, dass** die Markierungen (-2, -1, 0, +1, +2) die zur Rückführung in die Nullstellung erforderliche Drehrichtung angeben.

7. Wickelfederkassette nach Anspruch 1, **dadurch gekennzeichnet, dass** die Markierungen (-2, -1, 0, +1, +2) in ein Gehäuseteil (1, 2) eingeprägt sind.

8. Wickelfederkassette nach Anspruch 1, **dadurch gekennzeichnet, dass** die Wickelfederkassette mehrere Flachkabel (6, 6a) aufweist und eines der Flachkabel (6) durch eine Kennzeichnung (8) hervorgehoben ist.

9. Wickelfederkassette nach Anspruch 8, **dadurch gekennzeichnet, dass** zumindest eines der Flachkabel (6a) elektrisch funktionslos ist.

10. Wickelfederkassette nach Anspruch 1, **dadurch gekennzeichnet, dass** die Kennzeichnung (8) aus einer Bedruckung besteht.

11. Wickelfederkassette nach Anspruch 1, **dadurch gekennzeichnet, dass** die Kennzeichnung (8) aus einer Farbmarkierung besteht.

12. Wickelfederkassette mit einem um seine Längsachse in beide Richtungen drehbaren zylindrischen Rotorgehäuseteil (1) und einem feststehenden zylindrischen Statorgehäuseteil (2), wobei beide Gehäuseteile (1, 2) zueinander koaxial angeordnet sind, wobei ein durch die äußere Mantelfläche (4) des innenliegenden Gehäuseteils (1) und die innere Mantelfläche (3) des außenliegenden Gehäuseteils (2) begrenzter Wickelspalt (5) gebildet ist, in dem ein flexibles Flachkabel (6) dergestalt angeordnet ist, dass sein eines Ende am Rotorgehäuseteil (1) und sein anderes Ende am Statorgehäuseteil (2) befestigt ist und in der Nullstellung der beiden Gehäuseteile (1, 2) zueinander mit einem Abschnitt um die äußere Mantelfläche (4) des innenliegenden Gehäuseteils (1) in der einen Richtung und mit einem weiteren Abschnitt an der inneren Mantelfläche (4) des außenliegenden Gehäuseteils (2) anliegend in entgegengesetzter Richtung gewickelt ist, so dass zwischen den beiden Abschnitten eine die Wickelrichtung umkehrende Schleife (7) gebildet ist, wobei wenigstens eines der Gehäuseteile (1, 2) zumindest teiltransparent ausgebildet ist, so dass die Lage der Schleife (7) zumindest in einer Relativstellung der Gehäuseteile (1, 2) zueinander von außen direkt erkennbar ist,
**dadurch gekennzeichnet,**
**dass** auf dem Flachkabel (6) Markierungen aufgebracht sind, die im Bereich der Schleife (7) von außerhalb der Wickelfederkassette ablesbar sind, und die die Verdrehungsweite und Verdrehungsrichtung gegenüber der Nullstellung der Wickelfederkassette unmittelbar anzeigen.

13. Wickelfederkassette nach Anspruch 12, **dadurch gekennzeichnet, dass** die Markierungen auf dem Flachkabel (6) Zahlenangaben und eine durch Symbole kodierte Richtungsangabe umfassen.

14. Wickelfederkassette nach Anspruch 12 oder 13, **dadurch gekennzeichnet, dass** die Markierungen Verdrehungen der Wickelfederkassette in Abstufungen anzeigen, die kleiner als eine vollständige Umdrehung sind.

15. Wickelfederkassette nach Anspruch 1 und 12, **dadurch gekennzeichnet, dass** Markierungen, die einen Verdrehungsbetrag und eine Verdrehungsrichtung anzeigen, sowohl auf mindestens einem Gehäuseteil (1, 2) als auch auf dem Flachkabel (6) angeordnet sind.

## Claims

1. Coil spring cartridge having a cylindrical rotor housing member (1) which is rotatable in both directions, and a cylindrical stator housing member (2) which is stationary, whereby both housing members (1, 2) are arranged coaxially to each other, thus forming a winding gap (5) which is bounded by the outward shell surface (4) of the inner housing member (1) and the inward shell surface (3) of the outer housing member (2) and in which a flexible ribbon cable (6) is located in such a manner that its one end is attached to the rotor housing member (1) and its other end to the stator housing member (2) and which, when the two housing members (1, 2) are in the zero position to each other, is wound with one section around the outward shell surface (4) of the inner housing member (1) in the one direction and with another section close-lying on the inward shell surface (3) of the outer housing member (2) in the opposing direction so that a loop (7) is formed between the two sections which reverses the direction of winding, whereby at least one of the housing members (1, 2) is, at least section-wise, of a transparent design so that, at least when the housing members are in a relative position to each other, the position of the loop (7) can be perceived from the outside,
**characterised in that**
at least one of the housing members (1, 2) bears markings (-2, -1, 0, +1, +2) which, in a specified relative position of the housing members (1, 2), correspond to the position of the loop (7) that is immediately visible from the outside and on which the amount and direction of absolute rotation of both housing members (1, 2) to each other can be read off.

2. Coil spring cartridge according to Claim 1, **characterised in that**, at least in the area of the markings (-2, -1, 0, +1, +2), one housing member (1, 2) is of a transparent design.

3. Coil spring cartridge according to Claim 1, **characterised in that** at least one housing member (1, 2) is entirely composed of a transparent material.

4. Coil spring cartridge according to Claim 3, **characterised in that** the rotor housing member (1) is composed of a transparent material.

5. Coil spring cartridge according to Claim 1, **characterised in that** the markings (-2, -1, 0, +1, +2) specify the number of complete rotations in relation to the zero position.

6. Coil spring cartridge according to Claim 1, **characterised in that** the markings (-2, -1, 0, +1, +2) specify the direction of rotation required in order to regain the zero position.

7. Coil spring cartridge according to Claim 1, **characterised in that** the markings (-2, -1, 0, +1, +2) are engraved in one housing member (1, 2).

8. Coil spring cartridge according to Claim 1, **characterised in that** the coil spring cartridge shows several ribbon cables (6, 6a) and that one of the ribbon cables (6) is distinguished by an identification mark (8).

9. Coil spring cartridge according to Claim 1, **characterised in that** at least one of the ribbon cables (6a) is electrically inoperable.

10. Coil spring cartridge according to Claim 1, **characterised in that** the identification mark (8) consists of printing.

11. Coil spring cartridge according to Claim 1, **characterised in that** the identification mark (8) consists of a colour marking.

12. Coil spring cartridge having a cylindrical rotor housing member (1) which is rotatable in both directions and a cylindrical stator housing member (2) which is stationary, whereby both housing members (1, 2) are arranged coaxially to each other, thus forming a winding gap (5) which is bounded by the outward shell surface (4) of the inner housing member (1) and the inward shell surface (3) of the outer housing member (2) and in which a flexible ribbon cable (6) is located in such a manner that its one end is attached to the rotor housing member (1) and its other end to the stator housing member (2) and which, when the two housing members (1, 2) are in the zero position to each other, is wound with one section around the outward shell surface (4) of the inner housing member (1) in the one direction and with another section close-lying on the inward shell surface (3) of the outer housing member (2) in the opposing direction so that a loop (7) is formed between the two sections which reverses the direction of winding, whereby at least one of the housing members (1, 2) is at least partially of a transparent design so that, at least when the housing members are in a relative position to each other, the position of the loop (7) is immediately apparent from the outside
**characterised in that**
markings are applied to the ribbon cable (6) which, in the vicinity of the loop (7), can be read off from outside the coil spring cartridge and which immediately show the range of rotation and the direction of rotation in relation to the zero position of the coil spring cartridge.

13. Coil spring cartridge according to Claim 12, **characterised in that** the markings on the ribbon cable (6) include numerical data and also directional data which is coded by symbols.

14. Coil spring cartridge according to Claim 12 or Claim 13, **characterised in that** the markings indicate rotations of the coil spring cartridge in gradations which are smaller than a complete rotation.

15. Coil spring cartridge according to Claims 1 and 12, **characterised in that** markings indicating an amount of rotation and a direction of rotation are arranged on at least one housing member (1, 2) and also on the ribbon cable (6).

## Revendications

1. Cassette à ressort spiralé comprenant une partie de boîtier rotor (1) cylindrique, pouvant tourner autour de son axe dans les deux directions et une partie de boîtier stator (2) cylindrique, fixe, sachant que les deux parties de boîtier (1, 2) sont disposées coaxialement l'une par rapport à l'autre, sachant que la surface latérale extérieure (4) de la partie de boîtier intérieure (1) et la surface latérale intérieure (3) de la partie de boîtier extérieure (2) délimitent une fente d'enroulement (5), dans laquelle un câble plat (6) flexible est disposé de telle manière que l'une de ses extrémités se trouve fixée à la partie de boîtier rotor (1) et son autre extrémité à la partie de boîtier stator (2), et que, lorsque les deux parties de boîtier (1, 2) sont en position zéro l'une par rapport à l'autre, ledit câble soit enroulé, avec une section, autour de le surface latérale extérieure (4) de la partie de boîtier intérieure (1), dans une direction, et, avec l'autre section, sur la surface latérale intérieure (4) de la partie de boîtier extérieure (2), dans la direction opposée, de sorte qu'une boucle (7), qui renverse la direction d'enroulement, se trouve formée entre les deux sections, sachant que l'une des parties de boîtier (1, 2) au moins est de conception transparente, au moins par sections, de sorte que la position de la boucle (7) peut être décelée à partir de l'extérieur, au moins dans une position relative des parties de boîtier (1, 2) l'une par rapport à l'autre, **caractérisée en ce que** l'une des parties de boîtier (1, 2), au moins, présente des marquages (-2, -1, 0, +1, +2) qui, dans une position prédéterminée des parties de boîtier (1, 2) l'une par rapport à l'autre, correspondent à la position de la boucle (7), directement visible de l'extérieur, et sur lesquels le taux et la direction de la giration absolue des deux parties de boîtier (1, 2) l'une par rapport à l'autre peuvent être lus.

2. Cassette à ressort spiralé selon la revendication 1, **caractérisée en ce que** l'une des parties de boîtier (1, 2) est de conception transparente dans la région des marquages (-2, -1, 0, +1, +2).

3. Cassette à ressort spiralé selon la revendication 1, **caractérisée en ce qu'**au moins l'une des parties de boîtier (1, 2) consiste entièrement en un matériau transparent.

4. Cassette à ressort spiralé selon la revendication 3, **caractérisée en ce que** la partie de boîtier rotor (1) consiste en un matériau transparent.

5. Cassette à ressort spiralé selon la revendication 1, **caractérisée en ce que** les marquages (-2, -1, 0, +1, +2) indiquent le nombre des rotations complètes par rapport à la position zéro.

6. Cassette à ressort spiralé selon la revendication 1, **caractérisée en ce que** les marquages (-2, -1, 0, +1, +2) indiquent la direction de rotation nécessaire pour le retour à la position zéro.

7. Cassette à ressort spiralé selon la revendication 1, **caractérisée en ce que** les marquages (-2, -1, 0, +1, +2) sont empreints dans une partie de boîtier (1, 2).

8. Cassette à ressort spiralé selon la revendication 1, **caractérisée en ce que** la cassette à ressort spiralé présente plusieurs câbles plats (6, 6a) et que l'un des câbles plats (6) est accentué par un identificateur (8).

9. Cassette à ressort spiralé selon la revendication 8, **caractérisée en ce que** l'un des câbles plats (6a) au moins est sans fonction électrique.

10. Cassette à ressort spiralé selon la revendication 1, **caractérisée en ce que** l'identificateur (8) consiste en une impression.

11. Cassette à ressort spiralé selon la revendication 1, **caractérisée en ce que** l'identificateur (8) consiste en un marquage de couleur.

12. Cassette à ressort spiralé comprenant une partie de boîtier rotor (1) cylindrique, qui peut tourner autour de son axe dans les deux directions et une partie de boîtier stator (2) cylindrique, qui est fixe, sachant que les deux parties de boîtier (1, 2) sont disposées coaxialement l'une par rapport à l'autre, sachant que la surface latérale extérieure (4) de la partie de boîtier intérieure (1) et la surface latérale intérieure (3) de la partie de boîtier extérieure (2) délimitent une fente d'enroulement (5), dans laquelle un câble plat (6) flexible est disposé de telle manière que l'une de ses extrémités se trouve fixée à la partie de boîtier rotor (1) et son autre extrémité à la partie de boîtier stator (2), et que, lorsque les deux parties de boîtier (1, 2) sont en position zéro l'une par rapport à l'autre, ledit câble soit enroulé, avec une section, autour de la surface latérale extérieure (4) de la partie de boîtier intérieure (1), dans une direction, et, avec l'autre section, sur la surface latérale intérieure (4) de la partie de boîtier extérieure (2), dans l'autre direction, de sorte qu'une boucle (7), qui renverse la direction d'enroulement, soit formée entre les deux sections, sachant qu'au moins l'une des parties de boîtier (1, 2) est de conception transparente, au moins par sections, de sorte que la position de la boucle (7) puisse être décelée à partie de l'extérieur, au moins dans une position relative des parties de boîtier (1, 2) l'une par rapport à l'autre, **caractérisée en ce que**, sur le câble plat (6), sont appliqués des marquages qui, de l'extérieur de la cassette á ressort spiralé, peuvent être lus dans la région de la boucle (7), et qui indiquent directement l'étendue de la giration et le sens de giration par rapport à la position zéro de la cassette à ressort spiralé.

13. Cassette à ressort spiralé selon la revendication 12, **caractérisée en ce que** les marquages du câble plat (6) comprennent des chiffres et une indication de direction codée par un symbole.

14. Cassette à ressort spiralé selon revendication 12 ou 13, **caractérisée en ce que** les marquages indiquent des taux de giration de la cassette à ressort spiralé, qui sont inférieurs à une rotation complète.

15. Cassette à ressort spiralé selon l'une des revendications 1 à 12, **caractérisée en ce que** les marquages, qui indiquent un taux de giration et une direction de rotation, sont disposés aussi bien sur au moins une partie de boîtier (1, 2) que sur le câble plat (6).
